Europäisches Patentamt

European Patent Office

Office européen des brevets

(11) Veröffentlichungsnummer: **0 468 236 A1**

## EUROPÄISCHE PATENTANMELDUNG

(21) Anmeldenummer: **91110982.5**

(22) Anmeldetag: **03.07.91**

(51) Int. Cl.5: **G01F 15/06, G06M 1/27**

(30) Priorität: **27.07.90 DE 4023974**

(43) Veröffentlichungstag der Anmeldung:
**29.01.92 Patentblatt 92/05**

(84) Benannte Vertragsstaaten:
**BE DE ES FR GB IT NL**

(71) Anmelder: **G. Kromschröder AG**
**Adolfstrasse 7**
**W-4500 Osnabrück(DE)**

(72) Erfinder: **Bertke, Heinrich**
**Theodor Heuss Strasse 5**
**W-4512 Wallenhorst(DE)**

Erfinder: **Hampel, Peter**
**Zum Piepenkerl 4**
**W-4500 Osnabrück(DE)**
Erfinder: **Pohl, Werner**
**An der Rennbahn 50**
**W-4535 Westerkappeln(DE)**
Erfinder: **Schmidt, Joachim**
**Berliner Strasse 10**
**W-4512 Wallenhorst(DE)**

(74) Vertreter: **Zenz, Joachim Klaus, Dipl.-Ing. et al**
**Patentanwälte Zenz, Helber & Hosbach Am**
**Ruhrstein 1**
**W-4300 Essen 1(DE)**

(54) **Zählwerk, insbesondere für Gasmengenzähler.**

(57) Das Zählwerk, das einen bewegbaren Signalgeber (5) aufweist, wird von einem Gehäuse (4) umgeben, an dessen einer Wand (9) ein Zusatzmodul (7) befestigt ist. Letzterer enthält einen mit dem Signalgeber gekoppelten Auslesesensor (6). Der Zusatzmodul dient dazu, den Auslesesensor ohne Eingriff in das Gehäuse an letzterem zu befestigen. Mit dem Zusatzmodul können gleichzeitig weitere Komponenten angebaut bzw. nachgerüstet werden.

Fig.1

Die Erfindung betrifft ein Zählwerk, insbesondere für Gasmengenzähler, mit einem bewegbaren Signalgeber und einem diesem zugeordneten Auslesesensor.

Derartige Zählwerke arbeiten üblicherweise mit in einem Rahmen angeordneten Ziffernrollen, die zur direkten optischen Anzeige der Zählwerte dienen. Eine zusätzliche Auslesung, beispielsweise eine Fernauslesung, ist über den Signalgeber und den Auslesesensor möglich. Hierzu wird der Signalgeber in Abhängigkeit von der Zählung bewegt, wobei er beispielsweise mit einer der Ziffernrollen gekoppelt ist.

Nur bei einem Teil der Zählwerke ist vom Beginn des Betriebes an eine Fernauslesung vorgesehen. Allerdings ergibt es sich häufig im Laufe der Zeit, daß diese Möglichkeit genutzt werden soll. Um nun nicht sämtliche Zählwerke von vornherein mit der gesamten zusätzlichen Ausleseausrüstung versehen zu müssen, besteht die Tendenz, nur den bewegbaren Signalgeber serienmäßig zu montieren - was vergleichsweise einfach ist - und die Anordnung des Auslesesensors nachrüstbar zu gestalten. Letzterer wird also nur dann von vornherein montiert, wenn die zusätzliche Auslesung sofort beabsichtigt ist. Sollte ein entsprechender Bedarf später auftreten, so wird der Auslesesensor nachträglich eingbaut.

Bei einem bekannten Zählwerk dieser Art (EP0317819A2) läßt sich der Auslesesensor in einen Kanal einschieben, der im oder am Zählwerksrahmen angeordnet ist. Ein nachträglicher Zugang zu diesem Kanal ist also nur möglich, wenn der Zählwerksrahmen aus seinem Gehäuse herausgenommen worden ist oder wenn das Gehäuse zumindest entsprechend geöffnet worden ist. Dies bedeutet einen hohen Aufwand beim Nachrüsten und kann außerdem die Abgeschlossenheit des Zählwerksgehäuses beeinträchtigen.

Der Erfindung liegt die Aufgabe zugrunde, hier Abhilfe vorzusehen und ein Zählwerk der eingangs genannten Art zu schaffen, bei dem eine eventuelle Nachrüstung des Auslesesensors ohne Öffnungsoperationen am Zählwerksgehäuse durchgeführt werden kann.

Zur Lösung dieser Aufgabe ist das Zählwerk nach der Erfindung dadurch gekennzeichnet, daß der Auslesesensor in einem Zusatzmodul angeordnet ist, welcher an einer Wand eines das Zählwerk umgebenden Gehäuses befestigt ist, wobei der Zusatzmodul vorzugsweise durch eine Plombe am Gehäuse des Zählwerks gesichert ist.

Der Auslesesensor wird also als Bestandteil des Zusatzmoduls bei der Erstmontage, beim Nachrüsten im Werk oder beim Nachrüsten vor Ort einfch an das Gehäuse des Zählwerks angesetzt und durch dessen entsprechende Wand hindurch sowie gegebenenfalls durch die zugeordnete Wand des Zusatzmoduls vom Signalgeber beaufschlagt. Weitere Operationen, wie etwa die Entnahme des Zählwerksrahmens oder zumindest das Öffnen des Gehäuses sind nicht erforderlich. Eine etwaige Nachrüstung kann also ohne weiteres am installierten Gasmengenzähler vorgenommen werden, und zwar ohne dessen Eichplombe zu öffnen. Die Gefahr etwaiger Manipulationen entsteht dabei nicht. Die Befestigung des Zusatzmoduls kann beliebig erfolgen und ist vorzugsweise lösbar.

Als wesentlichen weiteren Vorteil bietet die Erfindung die Möglichkeit, dem Zusatzmodul durch Einfügung weiterer Zusatzkomponenten zusätzliche Funktionen zuzuordnen. Diese Funktionen können vielfältigster Art sein. Damit eröffnet sich ein breites Feld für die Zählwerksnachrüstung in Anpassung an die jeweiligen betrieblichen Erfordernisse.

So kann der Zusatzmodul erfindungsgemäß mindestens einen weiteren Sensor enthalten, um zusätzliche Parameter zu erfassen. Dabei handelt es sich beispielsweise um einen Leckssensor und/oder einen Drucksensor. Bevorzugt ist der weitere Sensor ein Erschütterungssensor, der sowohl Einsturzgefährdungen erfaßt als auch als Manipulationssensor unbefugte Eingriffe anzeigt bzw. entsprechende Abschaltsignale abgibt. Daneben können weitere Manipulationssensoren vorhanden sein, die auf Temperaturen und/oder Magnetfelder ansprechen.

In jedem Falle besteht erfindungsgemäß die Möglichkeit, die weiteren Sensoren mit Kompensationskomponenten zu verbinden. Dies gilt insbesondere dann, wenn der Zusatzmodul ein weiteres, vorzugsweise elektronisches Zählwerk enthält, das damit in die Lage versetzt wird, kompensierte Daten zu liefern.

Der Zusatzmodul ist mit den erforderlichen Anschlüssen versehen, wobei es sich vorzugsweise um einen Hausbusanschluß sowie einen Anschluß zur Datenfernübertragung handelt.

Eine konstruktiv besonders einfache Gestaltung ergibt sich dadurch, daß die Wand des Gehäuses, an der der Zusatzmodul befestigbar ist, eine Vertiefung aufweist und daß der Zusatzmodul mit einem in die Vertiefung eingreifenden Vorsprung versehen ist. Auf diese Weise können die im Zusatzmodul enthaltenen Sensoren sehr dicht an etwaigen, innerhalb des Gehäuses angeordneten Signalgebern angeordnet werden. Insbesondere für den Auslesesensor gilt, daß dadurch eine induktive oder kapazitive Kopplung mit dem zugeordneten Signalgeber unterstützt wird. Für eine ebenfalls mögliche optische Kopplung schlägt die Erfindung einen Klarsichteinsatz zwischen dem Gehäuse des Zählwerks und dem Zusatzmodul vor.

Die Erfindung richtet sich ferner auf einen Zusatzmodul für ein mit einem bewegbaren Signalgeber versehenes Zählwerk, insbesondere für Gasmengenzähler, wobei dieser Zusatzmodul erfindungsgemäß einen Auslesesensor für den Signalgeber des Zählwerks aufweist und an einer Wand eines das Zählwerk umgebenden Gehäuses befestigbar ist. Dieser Zusatzmodul bietet die Möglichkeit, das Zählwerk ohne Eingriff in dessen Gehäuse mit dem Auslesesensor auszurüsten, und zwar sowohl im Werk als auch vorzugsweise vor Ort bei in Betrieb befindlichem Gasmengenzähler.

In Weiterbildung der Erfindung ist der Zusatzmodul gekennzeichnet durch mindestens eine weitere Zusatzkomponente, bei der es sich beispielsweise um einen weiteren Sensor, um damit gekoppelte Kompensationskomponenten, ein weiteres, vorzugsweise elektronisches Zählwerk o.dgl. handeln kann. Dies bietet die Möglichkeit, ein Zählwerk in Grundausstattung zu fertigen und durch die erfindungsgemäße Modulbauweise an unterschiedliche Betriebsanforderungen anzupassen. Besondere Tragweite erhält dieser Vorteil dadurch, daß entsprechende Nachrüstungen oder Umrüstungen auch ohne weiteres vor Ort möglich sind.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand eines bevorzugten Ausführungsbeispiels im Zusammenhang mit der beiliegenden Zeichnung näher erläutert. Die Zeichnung zeigt in:

Fig. 1     einen Vertikalschnitt durch ein erfindungsgemäßes Zählwerk;

Fig. 2     einen Schnitt entlang der Linie II-II in Fig. 1;

Fig. 3     einen Schnitt entlang der Linie III-III in Fig. 1.

Das erfindungsgemäße Zählwerk ist vorgesehen für einen schematisch angedeuteten Gasmengenzähler 1. Das Zählwerk umfaßt einen Rahmen 2, in dem eine Mehrzahl von Ziffernrollen 3 gelagert ist. Der Rahmen 2 mit den Ziffernrollen 3 wird von einem Gehäuse 4 umgeben, welches sich an den Gasmengenzähler anschließt.

Mit den Ziffernrollen 3 des Zählwerks ist ein umlaufender Signalgeber 5 verbunden, der mit einem Auslesesensor 6 zusammenwirkt. Letzterer ist Bestandteil eines Zusatzmoduls 7, der mit seiner oberen Wand 8 an das Gehäuse 4 angesetzt ist, und zwar an dessen untere Wand 9. Der Signalgeber 5 ist mit dem Auslesesensor 6 optisch gekoppelt, wobei die Wände 8 und 9 hierfür einen Klarsichteinsatz 10 aufweisen. Der Auslesesensor 6 ermöglicht eine Fernübertragung der Zählwerksdaten, und zwar, wie schematisch angedeutet, über einen Anschluß 11.

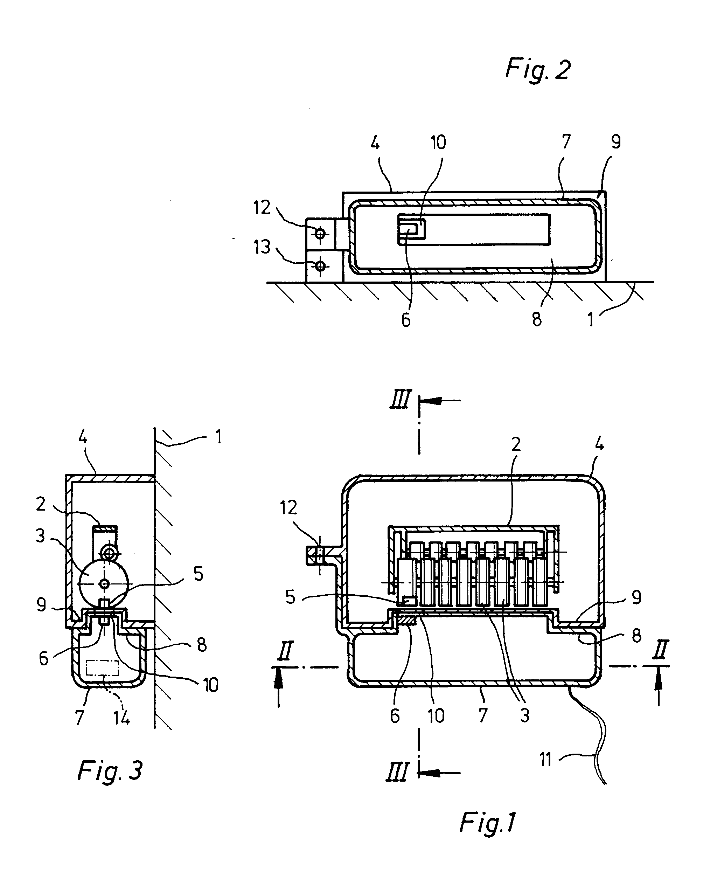

Die Erfindung bringt den wesentlichen Vorteil mit sich, daß der Zusatzmodul 7, sobald der Einsatz des Auslesesensors 6 erwünscht oder benötigt wird, einfach an das Gehäuse 4 angesetzt werden kann, und zwar ohne daß letzteres geöffnet oder demontiert werden müßte. Zur Sicherung dient eine schematisch angedeutete Plombe 12, die somit vergleichbar ist mit einer Eichplombe 13 (siehe Fig. 2), die das Gehäuse 4 gegenüber dem Gasmengenzähler 1 sichert.

Insbesondere aus den Figuren 1 und 3 ist ersichtlich, daß die Wand 9 des Gehäuses 4 eine Vertiefung aufweist und daß die Wand 8 des Zusatzmoduls 7 mit einem entsprechenden Vorsprung versehen ist, der in die Vertiefung eingreift. Dadurch läßt sich ein minimaler Abstand zwischen dem Signalgeber 5 und dem Auslesesensor 6 einstellen.

Wie der Einfachheit halber lediglich in Fig. 3 schematisch angedeutet, kann der Zusatzmodul 7 in wesentlicher Weiterbildung der Erfindung zur Aufnahme weiterer Zusatzkomponenten 14 dienen, wie sie für den jeweiligen Betrieb als zweckmäßig erscheinen. Es kann sich dabei um weitere Sensoren, beispielsweise zur Aufnahme von Drücken, Temperaturen, Magnetfeldern oder Erschütterungen sowie gegebenenfalls zugeordnete Kompensationselemente handeln, die etwa ein in den Zusatzmodul integriertes zusätzliches elektronisches Zählwerk steuern. Der Variationsmöglichkeiten dieser Zusatzkomponenten sind viele.

Auch umfaßt die Erfindung weitere Änderungen der obigen Beschreibung. So ist die Anordnung des Zusatzmoduls 7 am Gehäuse 4 beliebig. Gleiches gilt für die Art der Befestigung. Ferner kann das Gehäuse 4 eine Mehrzahl von Signalgebern enthalten, die mit entsprechenden Sensoren zusammenwirken. Die Bewegung der Signalgeber muß nicht direkt von den Ziffernrollen aus erfolgen, sondern kann auch beliebig an den Zählvorgang gekoppelt sein. Auch ist die Erfindung auf andere als Rollenzählwerke anwendbar.

**Patentansprüche**

1.   Zählwerk, insbesondere für Gasmengenzähler, mit einem bewegbaren Signalgeber und einem diesem zugeordneten Auslesesensor, dadurch gekennzeichnet, daß der Auslesesensor (6) in einem Zusatzmodul (7) angeordnet ist, welcher an einer Wand (9) eines das Zählwerk umgebenden Gehäuses (4) befestigt ist.

2.   Zählwerk nach Anspruch 1, dadurch gekennzeichnet, daß der Zusatzmodul (7) durch eine Plombe (12) am Gehäuse (4) des Zählwerks gesichert ist.

3.   Zählwerk nach Anspruch 1 oder 2, dadurch gekennzeichnet, daß der Zusatzmodul (7) mindestens eine weitere Zusatzkomponente (14) enthält.

4. Zählwerk nach Anspruch 3, dadurch gekennzeichnet, daß der Zusatzmodul (7) mindestens einen weiteren Sensor, vorzugsweise einen Erschütterungssensor enthält.

5. Zählwerk nach Anspruch 4, dadurch gekennzeichnet, daß der weitere Sensor mit einer Kompensationskomponente verbunden ist.

6. Zählwerk nach einem der Ansprüche 3 bis 5, dadurch gekennzeichnet, daß der Zusatzmodul (7) ein weiteres Zählwerk enthält.

7. Zählwerk nach einem der Ansprüche 1 bis 6, dadurch gekennzeichnet, daß die Wand (9) des Gehäuses (4) eine Vertiefung aufweist und daß der Zusatzmodul (7) mit einem in die Vertiefung eingreifenden Vorsprung versehen ist.

8. Zählwerk nach einem der Ansprüche 1 bis 7, gekennzeichnet durch einen Klarsichteinsatz (10) zwischen dem Gehäuse (4) des Zählwerks und dem Zusatzmodul (7).

9. Zusatzmodul für ein mit einem bewegbaren Signalgeber versehenes Zählwerk, insbesondere für Gasmengenzähler, dadurch gekennzeichnet, daß der Zusatzmodul (7) einen Auslesesensor (6) für den Signalgeber (5) des Zählwerks aufweist und an einer Wand (9) eines das Zählwerk umgebenden Gehäuses (4) befestigbar ist.

10. Zählwerk nach Anspruch 9, gekennzeichnet durch mindestens eine weitere Zusatzkomponente (14).

Fig. 2

Fig. 3

Fig.1

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | DE-U-8 715 591   (STADTWERKE KREFELD) <br> * Seite 5, Absatz 2 - Seite 6, Absatz 2; Seite 7, Zeilen 17-21; Seite 8, Zeile 25 - Seite 10; Figuren 1-6 * | 1,2,9 | G 01 F 15/06 <br> G 06 M 1/27 |
| D,Y | | 1,3-6,9, 10 | |
| | — — — | | |
| X | EP-A-0 275 000   (AQUACOM) <br> * Gesamtes Dokument * | 1,3,7,9 | |
| Y | | 1,3-6,9, 10 | |
| | — — — | | |
| Y | EP-A-0 242 937   (AMERICAN METER) <br> * Spalte 1, Zeilen 4-11; Spalte 2, Zeilen 30-49; Spalte 7, Zeile 23 - Spalte 8, Zeile 12; Figuren * | 1,3-6,9, 10 | |
| | — — — | | |
| A | DE-A-1 574 037   (TANKBAU WEILHEIM) <br> * Seite 1, Absätze 1,2; Seite 1, Absatz 7 - Seite 2, Absatz 1; Figuren 1-4 * | 1,8 | |
| | — — — — — | | |

| RECHERCHIERTE SACHGEBIETE (Int. Cl.5) |
|---|
| G 01 F |

Der vorliegende Recherchenbericht wurde für alle Patentansprüche erstellt

| Recherchenort | Abschlußdatum der Recherche | Prüfer |
|---|---|---|
| Den Haag | 17 Oktober 91 | PFLUGFELDER G.F. |